# EUROPEAN PATENT APPLICATION

(11) **EP 2 611 099 A1**
(43) Date of publication of application: **03.07.2013**
(21) Application number: 12163476.0
(22) Date of filing: 05.04.2012
(51) Int. Cl.: H04L 29/06, H04N 21/434, H04N 21/236

(54) **Digital broadcasting gateway apparatus and integrated digital broadcast signal transmitter**

(30) Priority: 29.12.2011 KR 20110146356
(71) Applicant: Korea Electronics Technology Institute, Gyeonggi-do 463-816 (KR)
(72) Inventor: Seo, Jeong Wook, 463-050 Gyeonggi-do (KR); Lee, Youn Sung, 110-797 Seoul (KR); Park, Kyung Won, 122-200 Seoul (KR); Kim, Seong Jun, 122-200 Seoul (KR); Woo, Yong Je, 143-130 Seoul (KR)
(74) Representative: Peter, Julian

(57) **Abstract**

Disclosed herein is a digital broadcasting gateway apparatus and integrated digital broadcast signal transmitter, which can convert digital content into integrated X2MI packets and transmit the X2MI packets, thus providing broadcasting services for terrestrial, satellite, and cable broadcasting media.

The digital broadcasting gateway apparatus includes a first module for receiving digital broadcast content configured in at least one of Transport Stream (TS), Generic Stream Encapsulation (GSE), Generic Fixed Packetized Stream (GFPS), Generic Continuous Stream (GCS) formats, and converting the digital broadcast content into Physical Layer Pipes (PLPs) conforming to an input scheme. A second module performs mode adaptation and stream adaptation on the PLPs depending on a preset frame configuration scheme and then converting the PLPs into baseband frames for S2 or C2. A third module converts the baseband frames into an integrated X2MI packet configured in predefined format.

## Description

### BACKGROUND OF THE INVENTION

### 1. Field of the Invention

The present invention relates, in general, to a digital broadcasting gateway apparatus and integrated digital broadcast signal transmitter and, more particularly, to a digital broadcasting gateway apparatus and integrated digital broadcast signal transmitter, which can convert digital content into integrated X2MI packets and transmit the X2MI packets, thus providing broadcasting services for terrestrial, satellite, and cable broadcasting media.

### 2. Description of the Related Art

Digital Television (TV) broadcasting refers to the transmission of broadcast signals, which were transmitted by broadcasting companies in the form of analog signals, in the form of digital signals. Since a larger amount of information can be transmitted over frequencies within the same bandwidth using video compression technology, digital TV broadcasting enables high-quality video, the quality of which is three to six times as high as that of existing television video, and high-quality sound, the quality of which is similar to the level of movies, to be transferred, and covers a large number of channels. As video compression standards for digital TV all around the world, MPEG-2 standards are used.

Transmission standards for digital TV broadcasting include the U.S.-based Advanced Television Systems Committee (ATSC) standards and the European-based Digital Video Broadcasting (DVB) standards. Korea adopted the U.S.-based ATSC standards after the repetition of a heated controversy between broadcasting companies and production companies in 1997.

Of these standards, the DVB standards are standards that have been jointly developed by individual countries in Europe, and are **characterized in that** compatibility among various types of media such as cable TV, satellite TV, terrestrial TV, and community antennas is improved. Such DVB standards include DVB-S which is a standard for digital satellite TV broadcasting, DVB-C which is a standard for digital cable TV broadcasting, and DVB-T which is a standard for digital terrestrial TV broadcasting. Recently, DVB-S2, DVB-T2, and DVB-C2 that provide higher transmission capacity have also been published.

There has been published conventional next-generation European digital terrestrial TV standard DVB-T2 transmission technology (paper, Information and Communications Magazine, Vol. 26, No. 10, pp. 40-45 ISSN 1226-4725 (October, 2009)).

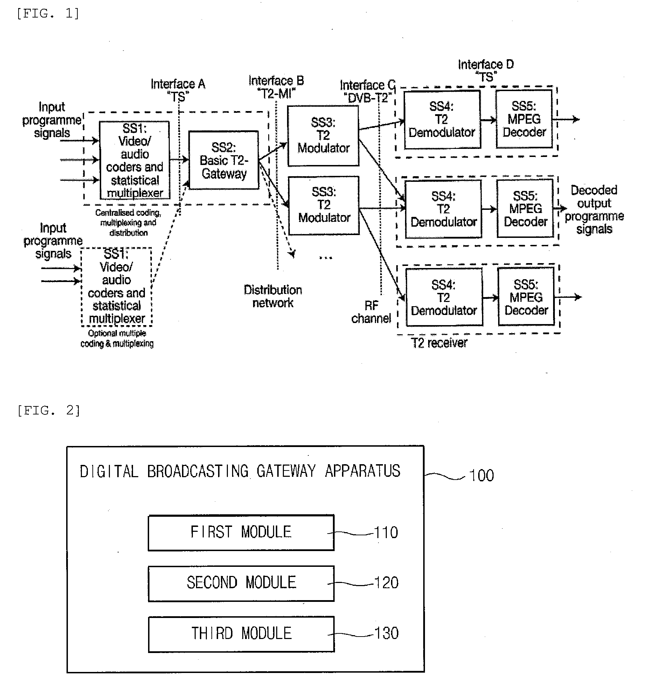

As shown in FIG. 1, conventional DVB-T2 transmission technology briefly presents an end-to-end chain reference model for DVB-T2. Further, this technology also briefly presents a procedure in which modulator interface (T2-MI) streams input from a basic T2-gateway are processed by a T2 modulator, and the main technology used in the T2 modulator.

However, the conventional transmission technology is disadvantageous that in order to transmit digital content in S2, T2, and C2 standards, respective broadcast content transmitters for those standards must be provided.

### SUMMARY OF THE INVENTION

Accordingly, the present invention has been made keeping in mind the above problems occurring in the prior art, and an object of the present invention is to provide a broadcast signal transmitter for digital terrestrial TV, digital satellite TV, and digital cable TV.

Another object of the present invention is to provide a broadcast signal transmitter and a digital broadcasting gateway apparatus, which can simultaneously transmit content to a plurality of broadcast signal transmitters.

In order to accomplish the above objects, the present invention provides a digital broadcasting gateway apparatus including a first module for receiving digital broadcast content configured in at least one of Transport Stream (TS), Generic Stream Encapsulation (GSE), Generic Fixed Packetized Stream (GFPS), Generic Continuous Stream (GCS) formats, and converting the digital broadcast content into Physical Layer Pipes (PLPs) conforming to an input scheme; a second module for performing mode adaptation and stream adaptation on the PLPs depending on a preset frame configuration scheme and then converting the PLPs into baseband frames for S2 or C2; and a third module for converting the baseband frames into an integrated X2MI packet configured in predefined format.

Preferably, the second module may perform mode adaptation and stream adaptation on the PLPs depending on a preset frame configuration scheme and then converts the PLPs into baseband frames for T2.

Preferably, the baseband frames for S2 may be obtained by converting the PLPs in light of a modulation scheme, code rate, and a Forward Error Correction (FEC) frame, the baseband frames for C2 may be obtained by converting the PLPs in light of a transmission bandwidth, a guard interval, and an L1 time interleaving scheme, and the baseband frames for T2 may be obtained by converting the PLPs in light of a transmission bandwidth, a Fast Fourier Transform (FFT) size, a guard interval, an L1 information modulation scheme, a pilot pattern, and Peak-to-Average Power Ratio (PAPR) mode.

Preferably, the integrated X2MI packet may include a header including a packet type value, a packet count value, a superframe index value, a system type value, a Reserved for Future Use (RFU) value , and a payload length value.

Preferably, the third module may convert the integrated X2MI packet into any one of TS, Asynchronous Serial Interface (ASI), and Ethernet formats so as to transmit the integrated X2MI packet to a broadcast signal transmitter.

Preferably, the third module may generate system layer frames depending on a preset frame configuration scheme, and converts the system layer frames into an integrated X2MI packet configured in predefined format.

Further, the present invention provides an integrated digital broadcast signal transmitter including a decoder unit for receiving an integrated X2MI packet from a digital broadcasting gateway apparatus, parsing the integrated X2MI packet, and then demodulating a parsed integrated X2MI packet into at least one of baseband frames for S2, baseband frames for T2, baseband frames for C2, and system layer frames depending on layer information; and a modulator unit for modulating the baseband frames depending on the layer information.

Preferably, the modulator unit may be configured to modulate the baseband frames in light of a transmission bandwidth, a Fast Fourier Transform (FFT) size, a guard interval, an L1 information modulation scheme, a pilot pattern, and Peak-to-Average Power Ratio (PAPR) mode when a system type of the integrated X2MI packet is a terrestrial type, modulate the baseband frames in light of a transmission bandwidth, a guard interval, and an L1 time interleaving scheme when the system type of the integrated X2MI packet is a cable type, and modulate the baseband frames in light of a modulation scheme, a code rate, and a Forward Error Correction (FEC) frame when the system type of the integrated X2MI packet is a satellite type.

### BRIEF DESCRIPTION OF THE DRAWINGS

FIG. 1 is a diagram showing a conventional DVB-T2 end-to-end chain reference model;
FIG. 2 is a block diagram showing a digital broadcasting gateway apparatus according to the present invention;
FIG. 3 is a block diagram showing an integrated digital broadcast signal transmitter according to the present invention;
FIG. 4 is a block diagram showing an integrated digital broadcast signal transmission system according to the present invention;
FIG. 5 is a diagram showing the structure of an integrated X2MI packet according to the present invention; and
FIG. 6 is a flowchart showing a method of generating an integrated X2MI packet according to the present invention.

### DESCRIPTION OF THE PREFERRED EMBODIMENTS

The above and other objects, features and advantages of the present invention will be more clearly understood from the following detailed description taken in conjunction with the accompanying drawings. Hereinafter, embodiments of the present invention will be described in detail with reference to the attached drawings so that those skilled in the art can easily understand and implement the present invention.

FIG. 2 is a block diagram showing a digital broadcasting gateway apparatus 100 according to the present invention.

As shown in FIG. 2, the digital broadcasting gateway apparatus 100 according to an embodiment of the present invention may include a first module 110, a second module 120, and a third module 130.

The first module 110 receives content and converts the content into Physical Layer Pipes (PLPs).

In this case, the PLPs enable a single physical broadcasting channel to be transmitted via a plurality of independent logical channels, and each PLP includes MPEG-2 Transport Streams (ST) or Generic Streams (GS).

The second module 120 converts the PLPs into baseband frames by performing mode adaptation and stream adaptation on the PLPs.

Here, the baseband frames may be used in any one of reception methods of DVB-S2, DVB-C2, and DVB-T2 that are European digital TV standards.

Baseband frames for S2, which is a European digital satellite TV standard, are used for DVB-S2 standard among European digital broadcasting transmission standards, and are obtained by converting the PLPs in light of a modulation scheme, code rate, a Forward Error Correction (FEC) frame, etc.

Baseband frames for C2, which is a European digital cable TV standard, are used for DVB-C2 standard among the European digital broadcasting transmission standards, and are obtained by converting the PLPs in light of a transmission bandwidth, a guard interval, an L1 time interleaving scheme, etc.

Baseband frames for T2, which is a European digital terrestrial TV standard, are used for DVB-T2 standard among the European digital broadcasting transmission standards, and are obtained by converting the PLPs in light of a transmission bandwidth, a Fast Fourier Transform (FFT) size, a guard interval, an L1 information modulation scheme, a pilot pattern, information about whether a Peak-to-Average Power Ratio (PAPR) has been used, etc. Baseband frames are frames to be transferred with content contained in the frames.

The third module 130 converts the baseband frames into an integrated X2MI packet, or generates system layer frames and converts the system layer frames into an integrated X2MI packet.

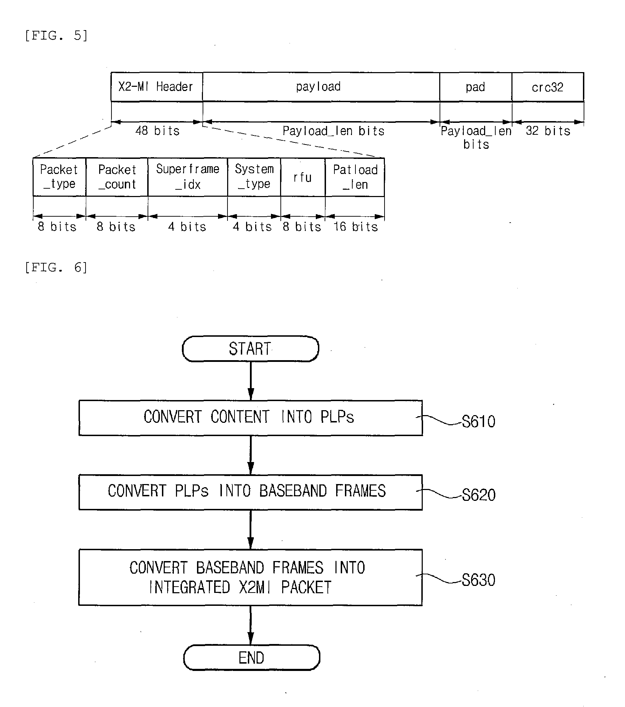

The integrated X2MI packet is a packet for communication between the digital broadcasting gateway apparatus 100 of the present invention and an integrated digital broadcast signal transmitter 200. Such an integrated X2MI packet has a structure shown in FIG. 5. The apparatus of the present invention converts broadcast signals into the integrated X2MI packet and transmits the X2MI packet, thus enabling the broadcast signal transmitter to transmit content to all TVs that use satellite, terrestrial and cable media.

In this case, the integrated digital broadcast signal transmitter 200 denotes a device capable of transmitting digital broadcast signals without any restriction being placed on the digital broadcasting standard. That is, the integrated digital broadcast signal transmitter 200 may transmit digital broadcast signals for digital satellite TV, digital terrestrial TV, and digital cable TV.

The digital broadcasting gateway apparatus 100 of the present invention generates broadcast signals for digital terrestrial TV, digital satellite TV, and digital cable TV by generating an integrated X2MI packet, and then transfers the broadcast signals to the broadcast signal transmitter. Further, the broadcast signal transmitter is capable of demodulating the received integrated X2MI packet and parsing the transmission schemes of the broadcast signals, and is also capable of modulating the relevant broadcast signals in accordance with the transmission schemes of the broadcast signals and transmitting signals for digital terrestrial TV, digital satellite TV, and digital cable TV.

Further, the third module 130 may change the generated integrated X2MI packet into output or the like in the format of a TS, an Asynchronous Serial Interface (ASI), or the Ethernet in order to transmit the generated integrated X2MI packet.

Here, the TS format denotes a communication protocol for audio/video data transmission and is a kind of digital container format. This format is used as the transmission scheme of unreliable transmission media such as a broadcasting network.

The ASI format denotes an interface scheme between pieces of equipment rather than a scheme for special systems.

The Ethernet format denotes an interface scheme used for connection to the Ethernet and is mainly used in User Datagram Protocol (UDP) communication.

The system layer frames are frames that contain system information required to transfer content to media such as satellite, terrestrial or cable media. The third module may generate system layer frames conforming to a preset transmission scheme and convert the generated system layer frames into an integrated X2MI packet. The system layer frames may be system layer frames for S2, system layer frames for C2, or system layer frames for T2 depending on digital broadcasting transmission standards.

In this case, the system layer frames for S2, which is a European digital satellite TV standard, are generated in light of a modulation scheme, code rate, an FEC frame, etc. The system layer frames for C2, which is a European digital cable TV standard, are generated in light of a transmission bandwidth, a guard interval, an L1 time interleaving scheme, etc. The system layer frames for T2, which is a European digital terrestrial TV standard, are generated in light of a transmission bandwidth, an FFT size, a guard interval, an L1 information modulation scheme, a pilot pattern, PAPR mode, etc.

Further, the system layer frames for the European digital satellite TV S2 may be frames that have experienced Physical Layer (PL) signaling of a European digital satellite TV standard DVB-S2. The system layer frames for the European digital cable TV C2 may be frames to which L1-part1 and L1-part2 in the L1 signaling data of a European digital cable TV standard DVB-C2 have been added. The system layer frames for the European digital terrestrial TV T2 may be frames to which L1-pre and L1-post in the L1 signaling data of a European digital terrestrial TV standard DVB-T2 have been added.

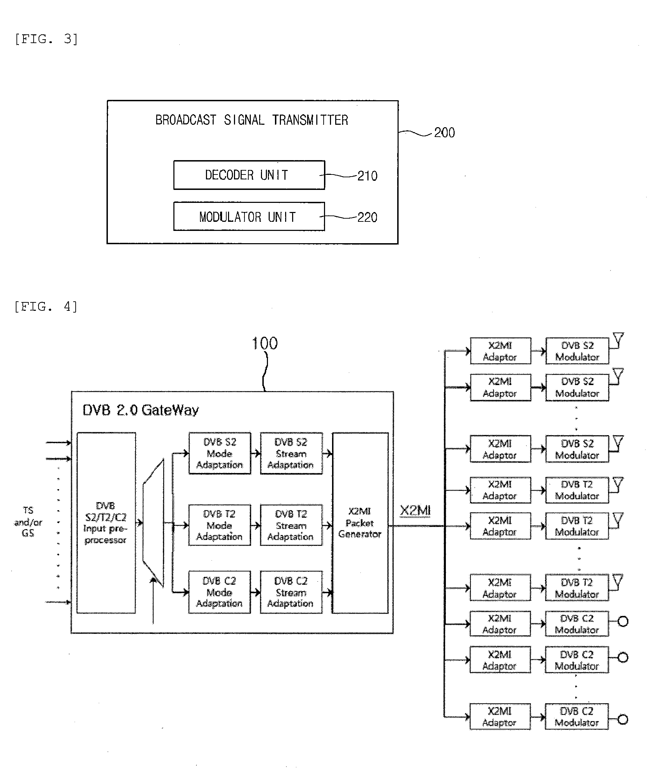

FIG. 3 is a block diagram showing the integrated digital broadcast signal transmitter 200 according to the present invention.

As shown in FIG. 3, the integrated digital broadcast signal transmitter 200 according to an embodiment of the present invention may include a decoder unit 210 and a modulator unit 220.

The decoder unit 210 decodes the header of a received integrated X2MI packet. That is, the integrated X2MI packet is demodulated into baseband frames or system layer frames by the decoder unit 210. The integrated X2MI packet is decoded, so that system information or content information required to generate broadcast signals for digital satellite TV, digital terrestrial TV, and digital cable TV is acquired.

In this case, the system information for digital satellite TV may be information related to the setting of a modulation scheme (e.g., Quadrature Phase Shift Keying: QPSK, 8 PSK, 16 Amplitude-Phase Shift Keying: 16 APSK, 32 APSK, etc.), code rate, a Forward Error Correction (FEC) frame, etc. The system information for digital terrestrial TV may be information related to the setting of a transmission bandwidth, an FFT size, a guard interval, an L1 information modulation scheme, a pilot pattern, PAPR mode, etc. The system information for digital cable TV may be information related to the setting of a transmission bandwidth, a guard interval, an L1 time interleaving scheme, etc.

The modulator unit 220 modulates the broadcast signals using the system information acquired by the decoder unit 210.

FIG. 4 is a block diagram showing an integrated digital broadcast signal transmission system according to the present invention. 6

As shown in FIG. 4, the integrated digital broadcast signal transmission system according to an embodiment of the present invention may include a digital broadcasting gateway apparatus 100 and a plurality of integrated digital broadcast signal transmitters 200.

The digital broadcasting gateway apparatus 100 may include a DVB input processor, a multiplexer, mode adapters and stream adapters for DVB-S2, DVB-T2, and DVB-C2, and an X2MI packet generator.

The input processor is a processor corresponding to a part of the common standard of a DVB 2.0 physical layer, and functions to separate a plurality of input MPEG2-Transport Streams (TSs) and Generic Streams (GSs) into one or more logical units.

The multiplexer functions to select one of terrestrial, satellite and cable TV systems as a digital TV system.

The mode adapters and the stream adapters vary depending on the European digital satellite TV transmission standard, the European digital terrestrial TV transmission standard, and the European digital cable TV transmission standard.

For example, the mode adapter for DVB-S2 performs functions such as a stream interface, the synchronization of input streams, null packet deletion for Adaptive Coding and Modulation (ACM) mode and TS input formatting, Cyclic Redundancy Check-8 (CRC-8) encoding for error detection, a slicer function of performing slicing to fit a frame length depending on modulation and encoding schemes and baseband (BB) signaling information, and an input stream merging function for multiple input streams. In the format configuring each frame, a BaseBand (BB) header is prefixed to a data field so as to notify a receiver of an input stream format and a mode adaptation format.

The stream adapter for DVB-S2 performs a padding function and a BB scrambling function in accordance with the length of a BB frame.

Each integrated digital broadcast signal transmitter 200 may include X2MI adapters and modulators.

Each X2MI adapter decodes the received integrated X2MI packet and then acquires system information or content information.

Each modulator modulates signals using the acquired system information. The modulated signals may be transmitted to the digital satellite TV, the digital terrestrial TV, or the digital cable TV.

The X2MI packet generator will be described in detail later.

FIG. 5 is a diagram showing the structure of an integrated X2MI packet according to the present invention.

As shown in FIG. 5, the structure of an integrated X2MI packet according to an embodiment of the present invention may include a header that has a packet type value, a packet count value, a superframe index value, a system type value, a Reserved for Future Use (RFU) value, and a payload length value.

The packet type value denotes the type of data to be transmitted in a payload. Here, the type of data to be transmitted in the payload may be a baseband frame in which multimedia data is transmitted, L1 data containing configuration information, Future Extension Frames (FEF) (frames reserved for future use), etc.

The packet count value is a parameter for counting X2MI packets that are transmitted, and may be represented by a hexadecimal value.

The superframe index value denotes a value required to process superframes applied to T2.

The system type value denotes one of digital terrestrial TV, digital satellite TV, and digital cable TV type values. This is a value for distinguishing broadcasting media.

The RFU value denotes a value for a reserved area allocated for future extension.

FIG. 6 is a flowchart showing a method of generating an integrated X2MI packet according to the present invention.

As shown in FIG. 6, the method of generating an integrated X2MI packet according to an embodiment of the present invention includes a first step S610, a second step S620, and a third step S630. At the first step S610, content configured in at least one format of Transport Stream (TS), Generic Stream Encapsulation (GSE), Generic Fixed Packetized Stream (GFPS), and Generic Continuous Stream (GCS) formats is input and is converted into Physical Layer Pipes (PLPs). At the second step S620, mode adaptation and stream adaptation are preformed on the PLPs depending on a preset frame configuration scheme, so that the PLPs are converted into baseband frames for S2 or C2. At the third step S630, the baseband frames are converted into an integrated X2MI packet, or, alternatively, system layer frames are generated depending on a preset frame configuration scheme and are then converted into an integrated X2MI packet.

As described above, the apparatus according to the present invention may convert and transmit broadcast signals for digital terrestrial TV, digital satellite TV, and digital cable TV using a single broadcast signal transmitter.

Further, the apparatus according to the present invention transmits integrated X2MI packets into which content has been converted, so that broadcast signals can be simultaneously transmitted via a plurality of broadcast signal transmitters, thus enabling the range of transmission of broadcast signals to be widened.

Furthermore, when the integrated X2MI packets according to the present invention are used, frames for DVB S2/T2/C2 can be integrated into a single frame and can be then transmitted, so that content can be transmitted without being limited by the type of media.

Although the preferred embodiments and application examples of the present invention have been disclosed for illustrative purposes, it is apparent that the present invention is not limited to the above specific embodiments and application examples and various modifications and changes can be implemented by those skilled in the art, without departing from the scope and spirit of the invention as disclosed in the accompanying claims. Those modifications and changes should not be taken independently of the technical spirit or scope of the present invention.

## Claims

1. A digital broadcasting gateway apparatus comprising:
a first module for receiving digital broadcast content configured in at least one of Transport Stream (TS), Generic Stream Encapsulation (GSE), Generic Fixed Packetized Stream (GFPS), Generic Continuous Stream (GCS) formats, and converting the digital broadcast content into Physical Layer Pipes (PLPs) conforming to an input scheme;
a second module for performing mode adaptation and stream adaptation on the PLPs depending on a preset frame configuration scheme and then converting the PLPs into baseband frames for S2 or C2; and
a third module for converting the baseband frames into an integrated X2MI packet configured in predefined format.

2. The digital broadcasting gateway apparatus according to claim 1, wherein the second module performs mode adaptation and stream adaptation on the PLPs depending on a preset frame configuration scheme and then converts the PLPs into baseband frames for T2.

3. The digital broadcasting gateway apparatus according to claim 2, wherein:
the baseband frames for S2 are obtained by converting the PLPs in light of a modulation scheme, code rate, and a Forward Error Correction (FEC) frame,
the baseband frames for C2 are obtained by converting the PLPs in light of a transmission bandwidth, a guard interval, and an L1 time interleaving scheme, and
the baseband frames for T2 are obtained by converting the PLPs in light of a transmission bandwidth, a Fast Fourier Transform (FFT) size, a guard interval, an L1 information modulation scheme, a pilot pattern, and Peak-to-Average Power Ratio (PAPR) mode.

4. The digital broadcasting gateway apparatus according to claim 2, wherein the integrated X2MI packet comprises a header including a packet type value, a packet count value, a superframe index value, a system type value, a Reserved for Future Use (RFU) value , and a payload length value.

5. The digital broadcasting gateway apparatus according to claim 2, wherein the third module converts the integrated X2MI packet into any one of TS, Asynchronous Serial Interface (ASI), and Ethernet formats so as to transmit the integrated X2MI packet to a broadcast signal transmitter.

6. The digital broadcasting gateway apparatus according to claim 2, wherein the third module generates system layer frames depending on a preset frame configuration scheme, and converts the system layer frames into an integrated X2MI packet configured in predefined format.

7. An integrated digital broadcast signal transmitter comprising:
a decoder unit for receiving an integrated X2MI packet from a digital broadcasting gateway apparatus, parsing the integrated X2MI packet, and then demodulating a parsed integrated X2MI packet into at least one of baseband frames for S2, baseband frames for T2, baseband frames for C2, and system layer frames depending on layer information; and
a modulator unit for modulating the baseband frames depending on the layer information.

8. The integrated digital broadcast signal transmitter according to claim 7, wherein the modulator unit is configured to:
modulate the baseband frames in light of a transmission bandwidth, a Fast Fourier Transform (FFT) size, a guard interval, an L1 information modulation scheme, a pilot pattern, and Peak-to-Average Power Ratio (PAPR) mode when a system type of the integrated X2MI packet is a terrestrial type,
modulate the baseband frames in light of a transmission bandwidth, a guard interval, and an L1 time interleaving scheme when the system type of the integrated X2MI packet is a cable type, and
modulate the baseband frames in light of a modulation scheme, a code rate, and a Forward Error Correction (FEC) frame when the system type of the integrated X2MI packet is a satellite type.
